# EUROPÄISCHE PATENTANMELDUNG

(11) **EP 1 420 616 A2**
(43) Veröffentlichungstag der Anmeldung: **19.05.2004**
(21) Anmeldenummer: 03024726.6
(22) Anmeldetag: 29.10.2003
(51) Int. Cl.: H05B 39/04

(54) **Verfahren und Einrichtung zur Erzeugung einer Versorgungsspannung für Leuchtmittel**

(30) Priorität: 15.11.2002 DE 10253245
(71) Anmelder: ABB PATENT GmbH, 68526 Ladenburg (DE)
(72) Erfinder: Fröchte, Bernd, Dr.-Ing., 45663 Recklinghausen (DE); Zapp, Robert, Dipl.-Ing., 58579 Schalskmühle (DE); Goldyn, Dirk, Dipl.-Ing., 58454 Witten (DE)
(74) Vertreter: Miller, Toivo

(57) **Zusammenfassung**

Die Erfindung bezieht sich auf ein Verfahren und eine entsprechende Einrichtung zur Erzeugung einer einstellbaren stabilisierten Versorgungsspannung (U_{A}) für Leuchtmittel (5), wobei eine Netzwechselspannung (U_{E}) einem steuerbaren Brückengleichrichter (2) zugeführt wird, der mittels einer Regeleinrichtung (4) angesteuert wird. Die Ausgangsspannung des steuerbaren Brückengleichrichters (2) wird einem Energiespeicher (3) zugeführt, der die Versorgungsspannung (U_{A}) liefert oder stützt. Der Regeleinrichtung (4) ist ein Sollwert mittels einem Sollwertgeber (6) vorgegeben, und die erzeugte Versorgungsspannung (U_{A}) wird als Istwert zugeführt.

## Beschreibung

Die Erfindung bezieht sich auf ein Verfahren und eine Einrichtung zur Erzeugung einer Versorgungsspannung für Leuchtmittel, wie beispielsweise Glühlampen.

Einrichtungen zur Erzeugung einer einstellbaren Versorgungsspannung zur Steuerung der Helligkeit von Leuchtmitteln sind allgemein als Dimmer bekannt. Solche Dimmer enthalten steuerbare Halbleiterbauelemente, z. B. Transistoren, Thyristoren oder Triacs, und arbeiten mit Phasenabschnitt- oder PhasenanschnittSteuerung.

Das elektrische Versorgungsnetz, das die Eingangsspannung eines Dimmers liefert, hat eine typische Nenn-Wechselspannung von 230 V mit einem Schwankungsbereich von etwa ± 10 %. In ländlichen Gebieten mit langen Freileitungen als Zuleitung sind besonders bei einer Zuschaltung von großen Lasten noch wesentlich größere Spannungsschwankungen möglich. Solche Spannungsschwankungen bewirken sichtbare Helligkeitsänderungen einer am Dimmer angeschlossener Beleuchtungseinrichtung. Wünschenswert ist daher eine Spannungsstabilisierung, die zwar mit bekannten Mitteln erreichbar wäre, aber zu einer Spannung unterhalb der Nennspannung führt. Dabei ist zu beachten, dass die Ausgangsspannung bekannter Dimmer bei eingestellter maximaler Helligkeit ohnehin etwa 3 % unterhalb der Eingangsspannung liegt. Eine weitere Absenkung der Ausgangsspannung zwecks Stabilisierung würde daher zu einer deutlichen Verringerung der Lichtausbeute sowie Änderung der Farbtemperatur der Leuchtmittel führen. Für Niedervolt-Halogenlampen sind zwar Konverter mit geregelter 12-V-Nennspannung bekannt, die aber kein Dimmen der Lampen ermöglichen.

Der Erfindung liegt daher die Aufgabe zugrunde, ein Verfahren zur Erzeugung einer einstellbaren Versorgungsspannung für Leuchtmittel anzugeben, das eine stabilisierte, auch etwas über der Eingangsspannung liegende Spannung ermöglicht. Außerdem soll eine Einrichtung zur Durchführung des Verfahrens angegeben werden.

Diese Aufgabe wird durch ein Verfahren zur Erzeugung einer einstellbaren stabilisierten Versorgungsspannung für Leuchtmittel gelöst, das die im Anspruch 1 angegebenen Merkmale aufweist. Eine entsprechende Einrichtung sowie vorteilhafte Ausgestaltungen sind in weiteren Ansprüchen angegeben.

Mit der Erfindung wird demnach vorgeschlagen, mittels einem steuerbaren Brückengleichrichter die Netzwechselspannung gleichzurichten und in einem Energiespeicher zwischenzuspeichern. Der steuerbare Brückengleichrichter wird mittels einer Regeleinrichtung angesteuert. Die mittels dem Energiespeicher gestützte Ausgangsspannung des Brückengleichrichters wird als Versorgungsspannung einem Leuchtmittel zugeführt. Die Regeleinrichtung ermöglicht die gewünschte Dimmfunktion durch entsprechende Sollwertvorgabe. Eine Spannungsstabilisierung wird durch Rückführung der Versorgungsspannung als Istwert im Regelkreis erreicht. Es ist ein besonderer Vorteil der erfindungsgemäßen Lösung, dass die Spannungsstabilisierung bei jedem eingestellten Wert im gedimmten Betrieb wirkt.

Vorteilhaft ist auch die einfache Anordnung, mit der das erfindungsgemäße Verfahren durchführbar ist. Als Regeleinrichtung ist ein Mikrocontroller geeignet. Bevorzugt wird die Verwendung eines Kondensators als Energiespeicher. Durch geeignete Auslegung der Kondensatorkapazität lässt sich eine Ausgangsspannung, also eine Versorgungsspannung oberhalb der Netzspannung erzeugen. Es ist in entsprechender Schaltung auch ein anderer Energiespeicher, wie z. B. eine Drosselspule verwendbar.

Eine weitere Beschreibung der Erfindung und deren Vorteile erfolgt nachstehend anhand eines in Zeichnungsfiguren dargestellten Ausführungsbeispiels.

Es zeigt:
- Fig. 1: eine Schaltungsanordnung einer erfindungsgemäßen Einrichtung,
- Fig. 2: den Spannungsverlauf an der Last bei Vollaussteuerung, und
- Fig. 3: einen Spannungsverlauf an der Last bei Teilaussteuerung.

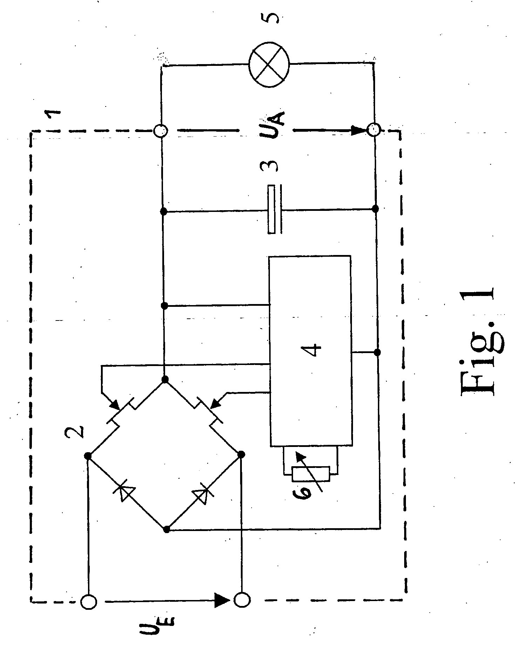

Fig. 1 zeigt eine Schaltungsanordnung einer Einrichtung 1 zur Erzeugung einer Versorgungsspannung U_{A} für Leuchtmittel 5. Die Einrichtung 1 enthält einen steuerbaren Brückengleichrichter 2, dem eine Netzspannung U_{E} als Eingangsspannung zugeführt ist. Die Ausgangsspannung des Gleichrichters 2 ist einem als Energiespeicher angeordneten elektrischen Kondensator 3 zugeführt. Ein Leuchtmittel 5 ist parallel zum Kondensator 3 anschließbar. Die Ansteuerung des steuerbaren Brückengleichrichters 2 erfolgt mittels einem Mikrocontroller 4, der als Regeleinrichtung angeordnet ist. Zur Einstellung des jeweiligen Sollwerts der Versorgungsspannung U_{A} ist ein Sollwertgeber 6 vorhanden. Die erzeugte Versorgungsspannung U_{A} ist als Istwert zum Mikrocontroller 4 zurückgeführt.

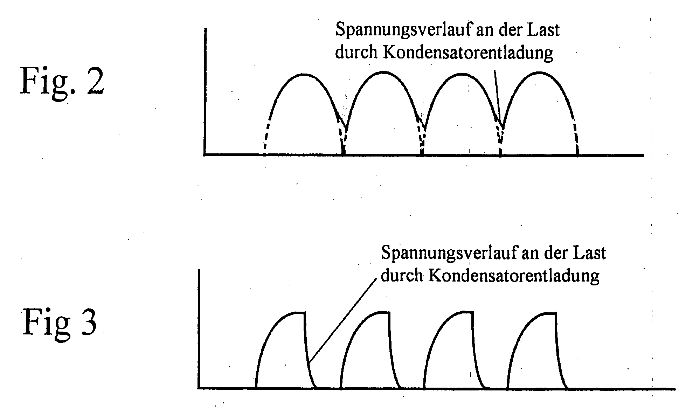

Die Arbeitsweise der Einrichtung 1, also des Verfahrens, wird nachstehend anhand der Fig. 1 in Verbindung mit den Figuren 2 und 3 erläutert.

Die Netzspannung U_{E} wird mittels des Brückengleichrichters 2 gleichgerichtet und dem angeschlossenen Kondensator 3 zugeführt. Der Ladezyklus des Kondensators 3 folgt damit den Halbwellen der Wechselspannung wie in Fig. 2 dargestellt ist. Der in Fig. 2 gestrichelt dargestellte Teil bezieht sich auf den Verlauf, der ohne Kondensator gegeben wäre. Die Entladung des Kondensators 3 über die Last, also das Leuchtmittel 5 erfolgt jeweils während der fallenden Halbwelle. Die im Kondensator gespeicherte Energie trägt so zur Erhöhung der effektiven Spannung an der Last bei. Bei entsprechender Auslegung des Kondensators kann die effektive Spannung oberhalb des Effektivwerts der treibenden Netzspannung liegen. Dadurch kann das Leuchtmittel bei maximaler Aussteuerung im - bezüglich Lichtausbeute und Farbtemperatur - optimalen Bereich betrieben werden. Ein Dimmen ist - wie bei üblichen Dimmern - durch kürzere Durchsteuerzeiten der steuerbaren Bauelemente, hier Transistoren, des Brückengleichrichters 2 erreichbar, wie in Fig. 3 für den Fall einer Phasenabschnittsteuerung dargestellt ist. Der Effektivwert der Ausgangsspannung U_{A} liegt dann deutlich unter der Eingangsspannung. Dargestellt ist ein Phasenabschnitt bei etwa 90°, wobei die Spannung wegen der Stützung durch den Kondensator gemäß einer e-Funktion abfällt.

Die Regelung mittels dem Mikrocontroller 4 bewirkt
- die Dimmfunktion entsprechend der Sollwertvorgabe,
- eine Stabilisierung der jeweiligen Ausgangsspannung bei Schwankungen der Eingangsspannung, und
- eine Begrenzung der Ausgangsspannung auf den für den Betrieb des Leuchtmittels maximal zulässigen Wert durch entsprechende Wahl des Zeitpunkts des Phasenabschnitts.

## Patentansprüche

1. Verfahren zur Erzeugung einer einstellbaren stabilisierten Versorgungsspannung (U_{A}) für Leuchtmittel (5), wobei
a) eine Netzwechselspannung (U_{E}) einem steuerbaren Brückengleichrichter (2) zugeführt wird,
b) der steuerbare Brückengleichrichter (2) mittels einer Regeleinrichtung (4) angesteuert wird,
c) die Ausgangsspannung des steuerbaren Brückengleichrichters (2) einem Energiespeicher (3) zugeführt wird, der die Versorgungsspannung (U_{A}) liefert, und
d) der Regeleinrichtung (4) ein Sollwert mittels einem Sollwertgeber (6) vorgegeben, und die erzeugte Versorgungsspannung (U_{A}) als Istwert zugeführt wird.

2. Einrichtung zur Erzeugung einer einstellbaren stabilisierten Versorgungsspannung (U_{A}) für Leuchtmittel (5), mit
a) einem steuerbaren Brückengleichrichter (2), dem eine Netzwechselspannung (U_{E}) zugeführt ist,
b) einem Energiespeicher (3), dem die Ausgangsspannung des steuerbaren Brückengleichrichters (2) zugeführt ist, und der zur Lieferung der Versorgungsspannung (U_{A}) verwendet ist, und
c) einer Regeleinrichtung (4),
- der ein Sollwert mittels einem Sollwertgeber (6) vorgebbar ist,
- der die erzeugte Versorgungsspannung (U_{A}) als Istwert zugeführt ist, und
- deren Ausgangssignal zur Ansteuerung des steuerbaren Brückengleichrichters (2) verwendet ist.

3. Einrichtung nach Anspruch 2, **dadurch gekennzeichnet, dass** die Regeleinrichtung (4) dafür eingerichtet ist, die Versorgungsspannung (U_{A}) auf einen vorgebbaren Maximalwert zu begrenzen.

4. Einrichtung nach Anspruch 2 oder 3, **dadurch gekennzeichnet, dass** als Energiespeicher (3) ein elektrischer Kondensator eingesetzt ist.

5. Einrichtung nach einem der Ansprüche 2 bis 4, **dadurch gekennzeichnet, dass** als Regeleinrichtung (4) ein Mikrocontroller verwendet ist.
